# EUROPÄISCHE PATENTSCHRIFT

(11) **EP 2 443 036 B1**
(45) Veröffentlichungstag und Bekanntmachung des Hinweises auf die Patenterteilung: **09.08.2017**
(21) Anmeldenummer: 10734643.9
(22) Anmeldetag: 09.06.2010
(51) Int. Cl.: B64F 1/12, B64F 1/00

(54) **GREIFERANORDNUNG FÜR LUFTFAHRZEUG-TRANSFERSYSTEME**
GRIPPER ARRANGEMENT FOR AIRCRAFT TRANSFER SYSTEMS
ENSEMBLE DE PRÉHENSION POUR SYSTÈME DE TRANSFERT DESTINÉ À UN AÉRONEF

(30) Priorität: 17.06.2009 DE 102009025650; 08.07.2009 DE 102009032396
(43) Veröffentlichungstag der Anmeldung: 25.04.2012
(73) Patentinhaber: Robert Bosch GmbH, 70442 Stuttgart (DE)
(72) Erfinder: BERG, van den Wilberth, NL-Lennisheuvel (NL); SCHALKX, Maarten, NL-Liempde (NL)
(74) Vertreter: Thürer, Andreas
(86) Internationale Anmeldenummer: PCT/DE2010/000649
(87) Internationale Veröffentlichungsnummer: WO 2010/145637

(56) Entgegenhaltungen:
- EP-A1- 0 227 229
- EP-A1- 0 661 207
- US-A- 3 303 807
- US-A- 4 123 020
- US-A- 4 319 722

## Beschreibung

Die Erfindung betrifft eine Greiferanordnung zum Transfer von Luftfahrzeugen gemäß dem Oberbegriff des Patentanspruchs 1.

Bei Greiferanordnungen zur Kopplung eines Luftfahrzeugs an ein Transfersystem, mit dem das Luftfahrzeug nach seiner Landung an eine Parkposition verschoben werden kann, gibt es verschiedene Ansätze. Eine Lösung ist in der US 3 303 807 A, eine andere Lösung in der US 4 123 020 A gezeigt.

In der Druckschrift EP 0 227 229 A1, die als nächstliegender Stand der Technik angesehen wird und alle Merkmale des Oberbegriffs des Anspruchs 1 beinhaltet, ist eine Greiferanordnung für einen Helikopter gezeigt, die einen U-förmigen Greifer zur Aufnahme eines Zapfens des Helikopters und einen Verriegelungsabschnitt zum Schließen des Greifers hat. Die Aufnahme ist derart ausgebildet, dass darin der Zapfen um eine senkrecht auf einer Aufstandsebene stehende Achse drehbar ist. Dadurch braucht das Luftfahrzeug vor der Kopplung an den Greifer bzw. das Transfersystem nicht ausgerichtet zu werden und kann während des Transfers gelenkt werden. Bei der aus der EP 0 227 229 A1 bekannten Greiferanordnung ist der Teil mit der Ausnehmung einstückig mit einem Greiferläufer ausgebildet, der mit Hilfe eines Schraubgelenks längs einer Spindel parallel zur Aufstandsebene verfahrbar ist.

Nachteilig an derartigen Greifern für Luftfahrzeug-Transfersysteme ist die fehlende Ausgleichsmöglichkeit bei leichten Kipp- und Neigebewegungen des Helikopters. Diese können z.B. auftreten, wenn die Landefläche des Helikopters auf einem Schiff angeordnet ist, und daher schwankt. Durch die daraus resultierenden Gewichtsverlagerungen des Helikopters kann dieser sich neigen (insbesondere bei gefederten Rädern). Dabei wird die Greiferanordnung hohen mechanischen Belastungen ausgesetzt.

Dem gegenüber liegt der Erfindung die Aufgabe zu Grunde, eine Greiferanordnung zur Kopplung an ein Luftfahrzeug-Transfersystem zu schaffen, die Kipp- oder Neigebewegungen des Luftfahrzeugs ausgleicht.

Diese Aufgabe wird gelöst durch eine Greiferanordnung nach Patentanspruch 1.

Die erfindungsgemäße Greiferanordnung dient zur Kopplung eines Luftfahrzeugs an ein Luftfahrzeug-Transfersystem. Die Greiferanordnung umfasst einen Greifer, mit dem ein am Luftfahrzeug befestigtes Verbindungsteil verbindbar ist. Der Greifer ist derart gestaltet, dass das Verbindungsteil im Greifer um eine etwa senkrecht zu einer Aufstandsebene angeordnete Drehachse drehbar ist. Der Greifer ist an einen im Wesentlichen parallel zu einer Aufstandsebene bewegbaren Greiferläufer gekoppelt. Außerdem ist der Greifer um zumindest eine etwa parallel zur Aufstandsebene angeordnete Spielachse drehbar oder schwenkbar. Dadurch können Kipp- oder Neigebewegungen des Luftfahrzeugs ausgeglichen werden, z.B. wenn sich die Aufstandsebene bewegt oder nicht waagerecht ist. Außerdem braucht das Luftfahrzeug vor der Kopplung an den Greifer bzw. das Transfersystem nicht ausgerichtet zu werden und kann während des Transfers gelenkt werden.

Weitere vorteilhafte Ausgestaltungen der Erfindung sind in den abhängigen Patentansprüchen beschrieben.

Bei einer besonders bevorzugten Weiterbildung der erfindungsgemäßen Greiferanordnung ist der Greifer um eine erste und um eine zweite Spielachse drehbar oder schwenkbar, wobei die beiden Spielachsen zueinander etwa rechwinklig angeordnet sind. Dadurch können gleichzeitig auftretenden Kipp- und Neigebewegungen um zwei zur Aufstandesebene parallele Achsen des Luftfahrzeugs ausgeglichen werden.

Bei einem besonders bevorzugten Ausführungsbeispiel ist der Greifer über eine Parallelogrammführung an den Greiferläufer gekoppelt. Die Parallelogrammführung hat ein Koppelelement, das schwenkbar mit dem Greiferläufer und um die erste Spielachse schwenkbar mit dem Greifer verbunden ist. Weiterhin hat die Parallelogrammführung eine zum Koppelelement etwa parallel verlaufende gelenkig mit dem Greifer und mit dem Greiferläufer verbundene Koppelstange. Das Koppelelement und die Koppelstange sind in einer oberen Grundstellung des Greifers etwa 45 Grad zur Aufstandsebene angestellt. Über die Parallelogrammführung kann der Greifer in senkrechter Richtung bewegt und dabei etwa parallel zur Aufstandsebenen gehalten werden.

Dabei wird es bevorzugt, wenn die Koppelstange in ihrer Länge verändert werden kann. Dadurch wird erreicht, dass der Greifer um das greiferseitige Schwenkgelenk des Koppelelements des Luftfahrzeugs schwenkbar ist, wodurch - je nach Orientierung des Luftfahrzeugs - seine Kipp- oder Neigebewegungen ausgeglichen werden kann.

Vorzugsweise ist ein Schwenkwinkel zwischen dem Koppelelement und dem Greifer um die erste Spielachse über eine beschränkte Längenänderung der Koppelstange auf etwa +/- 8 Grad beschränkt.

Bei einer bevorzugten Weiterbildung der erfindungsgemäßen Greiferanordnung hat die Parallelogrammführung eine in einer unbelasteten Grundstellung des Greifers etwa senkrecht zur Aufstandsebene angeordnete Koppelplatte, mit der das Koppelelement und die Koppelstange gelenkig verbunden sind, und mit der der Greifer über einen etwa parallel zur Aufstandsebene und senkrecht zur Koppelplatte und entlang der zweiten Spielachse angeordneten Drehzapfen drehbar verbunden ist. Dadurch kann - je nach Orientierung des Luftfahrzeugs - seine Kipp- oder Neigebewegung ausgeglichen werden.

Dabei wird es bevorzugt, wenn ein Drehwinkel zwischen dem Greifer und der Koppelplatte um die zweite Spielachse auf etwa +/-5 Grad beschränkt ist.

Aus Gründen einer einfach Koppelbarkeit zwischen dem Verbindungselement des Luftfahrzeugs und dem Greifer wird es bevorzugt, wenn die Ausnehmung des Greifers U-förmig ist und das Verbindungsteil ein sich vom Luftfahrzeug nach unten etwa senkrecht zur Aufstandebene erstreckender Zapfen ist, der über eine seitliche Öffnung in die U-förmige Ausnehmung des Greifers einführbar ist, und die seitliche Öffnung der U-förmigen Ausnehmung von einem Verriegelungsabschnitt verschließbar ist.

Bei einer bevorzugten Weiterbildung ist eine Höhe des Greifers über der Aufstandsebene über eine Höhenverstellung einstellbar. Dabei wird das Koppelelement von zwei sich am Greiferläufer abstützenden Federbeinen mit einer nach oben gerichteten Hebekraft beaufschlagt, und die Koppelplatte ist über ein biegeschlaffes Zugmittel mit einer nach unten gerichteten Absenkkraft beaufschlagbar.

Vorzugsweise hat der Greifer eine Umlenkrolle mit etwa waagerechter Drehachse, an der das biegeschlaffe Zugmittel (z.B. Stahlseil) anliegt, über das die Umlenkrolle und die Koppelplatte mit der Absenkkraft beaufschlagt werden kann. Dadurch ist ein Seilzug geschaffen, mit der der Greifer auf Grund seiner Verbindung mit der Koppelplatte einfach gegen die Federkraft heruntergezogen werden kann.

Bei einem Ausführungsbeispiel ist der Greiferläufer verfahrbar entlang einer Brücke angeordnet, die unter dem Luftfahrzeug angeordnet und parallel zur Aufstandsebene bewegbar ist. Dann wird es besonders bevorzugt, wenn das biegeschlaffe Zugmittel (z.B. Stahlseil) abschnittsweise entlang der Brücke verläuft, wobei der Greiferläufer zwei Umlenkrollen mit etwa waagerechter Drehachse hat, an denen das Zugmittel anliegt. Somit ist eine Verfahrbarkeit des Greiferläufers bei gleichzeitiger Beibehaltung der über den Seilzug eingestellten Höhe des Greifers geschaffen.

Zu Kopplung des Zapfens an den Greifer entlang der senkrechten Raumachse kann der Zapfen an zwei gegenüber liegenden Bereichen seiner Mantelfläche je einen sich etwa parallel zur Aufstandsebene erstreckenden Stift haben, der jeweils in einer Ausnehmung einer im Bereich der U-förmigen Ausnehmung angeordneten Halbhülse des Greifers aufnehmbar ist.

Dabei können die Stifte zur Kopplung einer Drehbewegung zwischen dem Zapfen und dem Greifer bei einer nach unten gerichteten Bewegung des Greifers in der jeweiligen Ausnehmung der Halbhülse einrasten, wobei die Halbhülse drehbar um die Drehachse im Greifer gelagert ist.

Es wird bevorzugt, wenn ein Drehwinkel der Halbhülse im Greifer auf etwa +/-45 Grad beschränkt ist.

Bei einem Anwendungsfall der erfindungsgemäßen Greiferanordnung ist das Luftfahrzeug ein Helikopter, und die Aufstandsebene ist auf einem Schiff angeordnet.

Im Folgenden wird anhand der Figuren ein Ausführungsbeispiel der Erfindung detailliert beschrieben. Es zeigen:
Figur 1 ein Ausführungsbeispiel einer erfindungsgemäßen Greiferanordnung in einer perspektivischen Ansicht;
Figur 2 das Ausführungsbeispiel der Greiferanordnung gemäß Figur 1 in einer seitlichen Ansicht; und
Figur 3 das Ausführungsbeispiel der Greiferanordnung gemäß Figur 1 in einer Draufsicht.

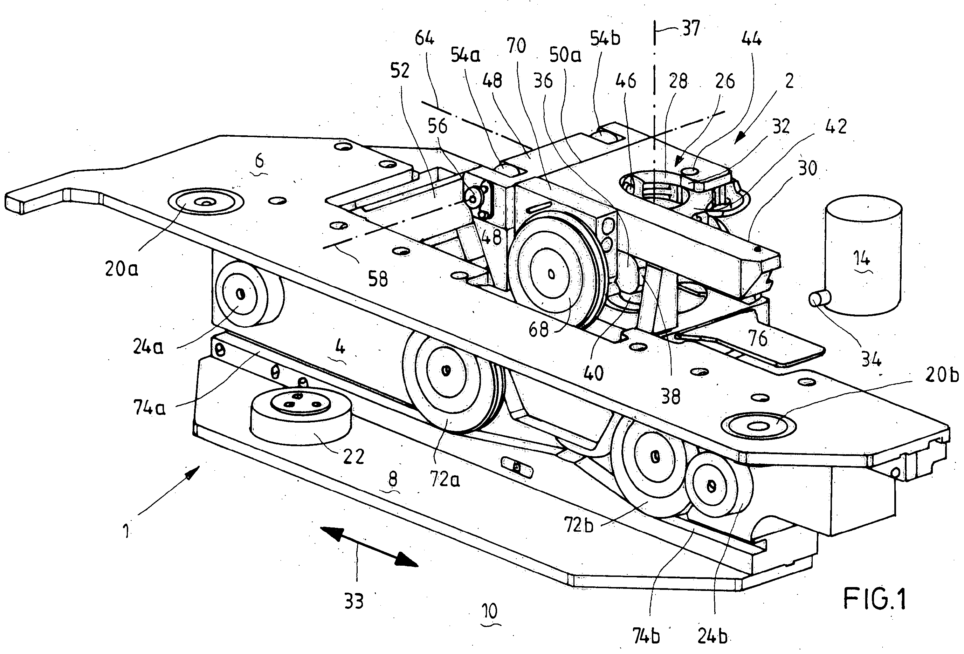

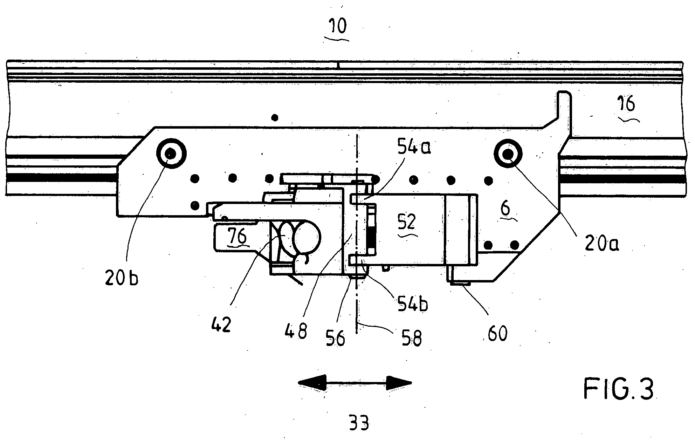

Figur 1 zeigt ein Ausführungsbeispiel einer erfindungsgemäßen Greiferanordnung in einer perspektivischen Ansicht. Diese hat im Wesentlichen einen Greiferläufer 1 und einen Greifer 2. Der Greiferläufer 1 hat einen Hauptabschnitt 4, einen oberen Rollenhalter 6 und einen unteren Rollenhalter 8. Die beiden Rollenhalter 6, 8 sind flächig ausgebildet und etwa parallel zu einer Aufstandsebene 10 eines nicht gezeigten Helikopters (vgl. Figur 3) angeordnet.

Am oberen Rollenhalter 6 sind zwei Führungsrollen 20a, 20b, und am unteren Rollenhalter 8 ist eine Führungsrolle 22 angeordnet, wobei die Rollen 20a, 20b, 22 jeweils etwa senkrecht zur Aufstandsebene 10 angeordnete Drehachsen haben. Der Hauptabschnitt 4 hat zwei Führungsrollen 24a, 24b, die jeweils etwa parallel zur Aufstandsebene 10 angeordnete Drehachsen haben. Über die Führungsrollen 20a, 20b, 22, 24a, 24b kann der Greiferläufer 1 und der damit verbundene Greifer 2 widerstandsarm entlang einer Brücke 16 (vgl. Figur 3) bewegt werden. Diese Verfahrrichtung ist in den Figuren mit einem Doppelpfeil 33 gekennzeichnet.

Der Greifer 2 hat eine etwa U-förmige Ausnehmung 26, die einen etwa halbkreisförmigen Randabschnitt 28, einen längeren geraden Randabschnitt 30 und einen kürzeren geraden Randabschnitt 32 hat. Die beiden geraden Randabschnitte 30, 32 erstrecken sich entlang der Verfahrrichtung 33 der Greiferanordnung 1, 2. Der Durchmesser des halbkreisförmigen Randabschnitts 28 und der Abstand der beiden geradlinigen Randabschnitte 30, 32 zueinander entspricht etwa dem Durchmesser eines Zapfens 14. Dieser ist mit seinem (in Figur 1) oberen Endabschnitt an der Unterseite des Helikopters befestigt und erstreckt sich etwa senkrecht zur Aufstandsebene 10 nach unten. Dabei sind an unteren Bereichen seiner äußeren Mantelfläche zwei Stifte angeordnet, die parallel zur Aufstandsebene 10 ausgerichtet sind, und von denen in Figur 1 nur ein Stift 34 gezeigt ist.

Unterhalb des halbkreisförmigen Randabschnitts 28 hat der Greifer 2 eine Halbhülse 36, deren Länge geringer ist als diejenige des Zapfens 14, und deren halbschalenförmige (nicht dargestellte) Innenwandung mit einem (in Figur 1) linken Bereich der Mantelfläche des Zapfens 14 zum Transfer des Helikopters in Anlage gebracht wird.

In den beiden zum Zapfen 14 gerichteten Randabschnitten der Halbhülse 36, von denen in Figur 1 nur ein Randabschnitt 38 gezeigt ist, sind jeweils etwa L-förmige Ausnehmungen angeordnet, von denen in Figur 1 nur eine die Stift 34 zugeordnete Ausnehmung 40 gezeigt ist. Die Ausnehmungen 40 sind derart bemessen, dass sie den jeweiligen Stift 34 aufnehmen können.

Weiterhin hat der Greifer 2 einen bogenförmigen Verriegelungsabschnitt 42, der schwenkbar an einem Drehzapfen 44 des Greifers 2 aufgenommen ist und in Figur 1 in seiner geschlossenen Position dargestellt ist.

Über einen etwa entlang der Verfahrrichtung angeordneten Drehzapfen 46 ist der Greifer 2 mit einer Koppelplatte 48 verbunden. Der Greifer 2 und die Koppelplatte 48 haben jeweils flächige an einander anliegende Anlageabschnitte, die senkrecht zur Verfahrrichtung stehen und von denen in Figur 1 nur ein gemeinsamer oberer Rand 50a dargestellt ist.

Die Koppelplatte 48 ist über ein Koppelelement 52 an den Hauptabschnitt 4 des Greiferläufers 1 gekoppelt. Dabei ist das Koppelelement 52 über seine beiden Gelenke 54a, 54b und über den Schwenkbolzen 56 um eine erste Spielachse 58 schwenkbar miteinander verbunden.

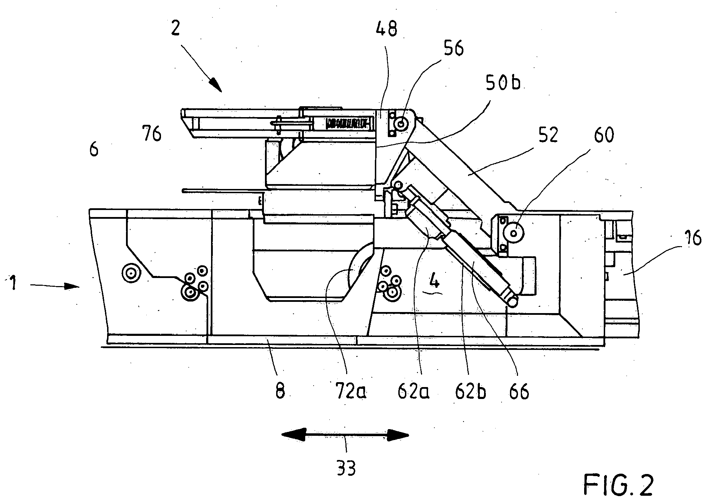

Figur 2 zeigt das Ausführungsbeispiel der Greiferanordnung 1, 2 gemäß Figur 1 in einer seitlichen Ansicht. Dabei ist neben dem Schwenkbolzen 56, über den das Koppelelement 52 mit der Koppelplatte 48 verbunden ist, eine Stirnseite eines weiteren Schwenkbolzens 60 gezeigt, über den das Koppelelement 52 mit dem Hauptabschnitt 4 des Greiferläufers 1 schwenkbar verbunden ist.

Das Koppelelement 52, dessen flächige Form in Figur 3 ersichtlich ist, bildet gemäß Figur 2 zusammen mit einer Koppelstange 62a, 62b eine Parallelogrammführung zwischen der Koppelplatte 48 bzw. dem damit verbundenen Greifer 2 und dem Hauptabschnitt 4 des Greiferläufers 1. Dabei ist die Koppelstange 62a, 62b unterhalb des Koppelelements 52 angeordnet und ebenfalls mit der Koppelplatte 48 und mit dem Greiferläufer 1 über je ein Schwenkgelenk verbunden. Die beiden Schwenkgelenke der Koppelstange 62a, 62b sind unterhalb der beiden Schwenkbolzen 56, 60 angeordnet. Die Koppelstange besteht aus zwei Koppelstangenabschnitten 62a, 62b, die relativ zueinander entlang ihrer gemeinsamen Längsachse bewegt werden können. Dabei sind mechanische Anschläge vorgesehen, so dass die Gesamtlänge der Koppelstange 62a, 62b in vorbestimmten Grenzen variabel ist. Bei einer zueinander gerichteten Bewegung der beiden Abschnitte 62a, 62b (Verkürzung der Koppelstange) wirkt eine nicht gezeigte Druckfeder, während eine voneinander weg gerichtete Bewegung der beiden Abschnitte 62a, 62b bis zum mechanischen Anschlag widerstandsarm ist.

Durch diese in ihrer Länge veränderliche Koppelstange 62a, 62b ist eine variable Parallelogrammführung zwischen der Koppelplatte 48 und dem Hauptabschnitt 4 geschaffen, durch die der Greifer 2 aus seiner in Figur 2 gezeigten waagerechten Grundstellung um den Schwenkbolzen 56 bzw. um die erste Spielachse 58 (vgl. Figur 1) um +/- 8° verschwenkt bzw. gekippt werden kann.

Figur 1 zeigt eine zweite Spielachse 64, die mit einer Längsachse des Drehzapfens 46 zusammenfällt. Wie oben beschrieben, ist der Greifer 2 gegenüber der Koppelplatte 48 um den Zapfen 46 drehbar, wobei diese Drehbewegung über (nicht gezeigte) mechanische Anschläge auf +/- 5° beschränkt ist.

Weiterhin hat die erfindungsgemäße Greiferanordnung 1, 2 eine Höhenverstellung, die zur Anpassung des Greifers 2 an verschiedene Positionen des Zapfens 14 über der Aufstandsebene 10 dient. Über die Parallelogrammführung kann die Koppelplatte 48 und damit der Greifer 2 auf verschiedene Höhenlagen über der Aufstandsebene 10 eingestellt werden, wobei die Koppelplatte 48 im unbelasteten Zustand stets etwa senkrecht zur Aufstandsebene 10 ausgerichtet ist. Dabei ist der Greifer 2 über die Koppelplatte 48 und über das Koppelelement 52 mit der Hebekraft zweier Druckfedern beaufschlagt, die in zwei Federbeinen angeordnet sind. Die beiden Federbeine, von denen in Figur 2 nur ein Federbein 66 gezeigt ist, sind einerseits mit dem Koppelelement 52 und andererseits mit dem Hauptabschnitt 4 des Greiferläufers 1 schwenkbar verbunden. Dabei sind die Federbeine 66 - vergleichbar mit dem Koppelelement 52 und der Koppelstange 62a, 62b - in der in Figur 2 gezeigten Grundstellung des Greifers 2 etwa um 45° zur Aufstandsebene 10 angestellt.

Figur 1 zeigt eine Anordnung, über die eine Absenkkraft auf die Koppelplatte 48 und damit auf den Greifer 2 gegen die Kraft der beiden Federbeine 66 (vgl. Figur 2) aufgebracht wird. Die Anordnung hat eine obere Umlenkrolle 68, die über einen Halteabschnitt 70 an der Koppelplatte 48 befestigt ist, und zwei untere Umlenkrollen 72a, 72b, die am Hauptabschnitt 4 des Greiferläufers 1 befestigt sind. Die Umlenkrollen 68, 72a, 72b sind entlang der Verfahrrichtung 33 betrachtet zueinander fluchtend angeordnet, und ein Abstand von benachbarten Umfangsabschnitten der beiden unteren Umlenkrollen 72a, 72b entspricht etwa dem Durchmesser der Umlenkrollen 68, 72a, 72b. Im Hauptabschnitt 4 des Greiferläufers 1 sind zwei Seilführungsnuten 74a, 74b parallel zur Verfahrrichtung 33 angeordnet, die sich tangential von der jeweiligen unteren Umlenkrolle 72a, 72b weg erstrecken.

Ein (nicht gezeigtes) Seil verläuft durch die Seilführungsnuten 74a, 74b, liegt weiterhin an etwa einem Viertel des Umfangs jeder unteren Umlenkrolle 72a, 72b an und wird dabei zur oberen Umlenkrolle 68 gerichtet, und liegt dort etwa an der oberen Hälfte des Umfangs der oberen Umlenkrolle 68 an.

Diese Anordnung ermöglicht es der erfindungsgemäßen Greiferanordnung 1, 2, entlang der (in Figur 3 gezeigten) Brücke 16 gemäß dem Doppelpfeil 33 bewegt zu werden, wobei das in Verfahrrichtung 33 ruhende Seil über die Umlenkrollen 68, 72a, 72b läuft bzw. abrollt. Wenn dabei die Seilspannung beibehalten wird, wirkt auf die obere Umlenkrolle 68 eine im Wesentlichen gleichmäßige nach unten gegen die Kräfte der beiden Federbeine 66 gerichtete Seilkraft auf die Koppelplatte 48. Somit bleibt die Höhe des damit verbundenen Greifers 2 - abgesehen von eventuellen Drehbewegungen um die zweite Spielachse 64 - konstant.

Wenn die Höhe des Greifers 2 mit der Koppelplatte 48 verändert werden soll, wird das (nicht gezeigte) Seil gegen die Kraft der Federbeine 66 verkürzt, wodurch ein Absenken des Greifers 2 erfolgt, oder das Seil wird nachgegeben, wodurch die Federbeine 66 die Koppelplatte 48 mit dem Greifer 2 anheben können. Die Einstellung der Seillänge erfolgt über eine (nicht gezeigte) Vorrichtung an einem der Endabschnitte der Brücke 16.

Im Folgenden wird ein Koppeln bzw. Verbinden des Zapfens 14 des Helikopters mit dem Greifer 2 erläutert. Nachdem der (nicht gezeigte) Helikopter mit dem an seiner Unterseite befestigten Zapfen 14 auf der Aufstandsebene 10 gelandet ist, wird die erfindungsgemäße Greiferanordnung 1, 2 über ein Transfersystem, von dem in Figur 3 nur die Brücke 16 abschnittsweise gezeigt ist, derart positioniert, dass der halbkreisförmige Randabschnitt 28 und die Halbhülse 36 des Greifers 2 entlang der Verfahrrichtung 33 mit dem Zapfen 14 fluchten. Dabei ist die Koppelplatte 48 mit dem Greifer 2 über das (nicht gezeigte) Seil an seine unterste Position gezogen, bei der die obere Oberfläche des Greifers 2 etwa mit derjenigen des oberen Rollenhalters 6 in einer Ebene liegt. Nachdem eventuell eine grobe Voreinstellung der Höhe des Greifers 2 über ein Nachlassen des Seils vorgenommen wurde, erfolgt die endgültige Höheneinstellung durch ein Nachlassen des Seils, bis eine Anschlagplatte 76 des Greifers 2 an der unteren Stirnseite des Zapfens 14 anschlägt.

Darauf hin wird die Greiferanordnung 1, 2 entlang der Verfahrrichtung 33 in Figur 1 nach rechts verfahren, bis die beiden Stifte 34 in die zugehörige Ausnehmung 40 der Halbhülse 36 eingetaucht sind. Da die Stifte 34 in der Praxis meistens nicht quer zur Verfahrrichtung 33 ausgerichtet sein werden, kann ein Ausgleich dadurch erfolgen, dass die Halbhülse 36 um +/- 45° um eine senkrechte Drehachse 37 im Greifer 2 drehbar ist. Bei dieser Bewegung ist der Verriegelungsabschnitt 42 geöffnet und nimmt danach in die in den Figuren 1 und 3 gezeigte Position ein, in der der Zapfen 14 umfasst ist.

Nach dem ersten Eintauchen der beiden Stifte 34 in die Ausnehmungen 40 wird der Greifer 2 mit der Halbhülse 36 um ein vergleichsweise kleines Stück abgesenkt, wodurch die beiden Stifte 34 einen jeweiligen Endanschlag der zugeordneten etwa L-förmigen Ausnehmung 40 erreichen, und der Helikopter über seinen Zapfen 14 mit der erfindungsgemäßen Greiferanordnung 1, 2 und damit mit dem Transfersystem verbunden ist.

Schließlich kann durch ein Bewegen der Brücke 16 (vgl. Figur 3) parallel zur Aufstandsebene 10 der Helikopter z.B. in einen Hangar bewegt werden.

Wenn die Aufstandsebene 10 z.B. auf einem durch Wellen bewegten Schiff angeordnet ist, oder wenn Windböen am Helikopter angreifen, kann dieser leichte Kipp- oder Neigebewegungen ausführen, ohne dass die erfindungsgemäße Greiferanordnung 1, 2 und das Transfersystem dadurch zusätzlich belastet werden. Dazu kann der Greifer 2 erfindungsgemäß um +/- 8° um die erste Spielachse 58 und um +/- 5° um die zweite Spielachse 64 geschwenkt bzw. gedreht werden. Weiterhin kann der Helikopter um +/-45° um die senkrechte Drehachse 37 zum Greifer 2 und somit zum Transfersystem gedreht sein. Dadurch kann der Helikopter von verschiedenen Landepositionen abgeholt werden und kann während des Verfahrens ausgerichtet, gelenkt und manövriert werden.

Offenbart ist eine Greiferanordnung zur Kopplung eines Luftfahrzeugs an ein Luftfahrzeug-Transfersystem, wobei am Luftfahrzeug ein mit einem Greifer verbindbares Verbindungsteil befestigt ist, und wobei der Greifer an einen im Wesentlichen parallel zu einer Aufstandsebene bewegbaren Greiferläufer gekoppelt ist. Dabei ist der Greifer um zumindest eine parallel zur Aufstandsebene angeordnete Spielachse drehbar oder schwenkbar.

## Patentansprüche

1. Greiferanordnung zur Kopplung eines Luftfahrzeugs an ein Luftfahrzeug-Transfersystem, mit einem Greifer (2), mit dem ein am Luftfahrzeug befestigtes Verbindungsteil (14) verbindbar ist, wobei der Greifer (2) derart gestaltet ist, dass das Verbindungsteil (14) im Greifer (2) um eine senkrecht zu einer Aufstandsebene (10) angeordnete Drehachse (37) drehbar ist, und wobei der Greifer (2) an einen im Wesentlichen parallel zur Aufstandsebene (10) bewegbaren Greiferläufer (1) gekoppelt ist, **dadurch gekennzeichnet, dass** der Greifer (2) um zumindest eine etwa parallel zur Aufstandsebene (10) angeordnete Spielachse (58, 64) drehbar oder schwenkbar ist.

2. Greiferanordnung nach Patentanspruch 1, wobei der Greifer (2) um eine erste Spielachse (58) und um eine zweite Spielachse (64) drehbar oder schwenkbar ist, wobei die beiden Spielachsen (58, 64) zueinander etwa rechwinklig angeordnet sind.

3. Greiferanordnung nach Patentanspruch 2, wobei der Greifer (2) über eine Parallelogrammführung (4, 48 ,52, 62a, 62b) an den Greiferläufer (1) gekoppelt ist, und wobei die Parallelogrammführung (4, 48 ,52, 62a, 62b) ein Koppelelement (52) hat, das schwenkbar mit dem Greiferläufer (1) und um die erste Spielachse (58) schwenkbar mit dem Greifer (2) verbunden ist, und wobei die Parallelogrammführung (4, 48 ,52, 62a, 62b) eine zum Koppelelement (52) etwa parallel verlaufende gelenkig mit dem Greifer (2) und mit dem Greiferläufer (1) verbundene Koppelstange (62a, 62b) hat, wobei das Koppelelement (52) und die Koppelstange (62a, 62b) in einer oberen Grundstellung des Greifers (2) etwa 45 Grad zur Aufstandsebene (10) angestellt sind.

4. Greiferanordnung nach Patentanspruch 3, wobei eine Länge der Koppelstange (62a, 62b) veränderbar ist.

5. Greiferanordnung nach Patentanspruch 3 oder 4, wobei ein Schwenkwinkel zwischen dem Koppelelement (25) und dem Greifer (2) um die erste Spielachse (58) über eine beschränkte Längenänderung der Koppelstange (62a, 62b) auf etwa +/- 8 Grad beschränkt ist.

6. Greiferanordnung nach einem der Patentansprüche 3 bis 5, wobei die Parallelogrammführung (4, 48 ,52, 62a, 62b) eine in einer unbelasteten Grundstellung des Greifers (2) etwa senkrecht zur Aufstandsebene (10) angeordnete Koppelplatte (48) hat, mit der das Koppelelement (52) und die Koppelstange (62a, 62b) gelenkig verbunden sind, und mit der der Greifer (2) über einen senkrecht zur Koppelplatte (48) angeordneten und entlang der zweiten Spielachse (64) verlaufenden Drehzapfen (46) drehbar verbunden ist.

7. Greiferanordnung nach Patentanspruch 6, wobei ein Drehwinkel zwischen dem Greifer (2) und der Koppelplatte (48) um die zweite Spielachse (64) auf etwa +/-5 Grad beschränkt ist.

8. Greiferanordnung nach einem der Patentansprüche 1 bis 7, wobei die Ausnehmung (26) des Greifers (2) U-förmig ist und wobei das Verbindungsteil ein sich vom Luftfahrzeug nach unten etwa senkrecht zur Aufstandsebene (10) erstreckender Zapfen (14) ist, der über eine seitliche Öffnung in die U-förmige Ausnehmung (26) des Greifers (2) einführbar ist, und wobei die seitliche Öffnung der U-förmigen Ausnehmung (26) von einem Verriegelungsabschnitt (42) verschließbar ist.

9. Greiferanordnung nach einem der vorhergehenden Patentansprüche, wobei ein Abstand des Greifers (2) zur Aufstandsebene (10) über eine Höhenverstellung (66, 68, 72a, 72b) einstellbar ist.

10. Greiferanordnung nach Patentanspruch 9, wobei das Koppelelement (52) von zwei sich am Greiferläufer (1) abstützenden Federbeinen (66) mit einer nach oben gerichteten Hebekraft beaufschlagt ist, und wobei die Koppelplatte (48) über ein biegeschlaffes Zugmittel mit einer nach unten gerichteten Absenkkraft beaufschlagbar ist.

11. Greiferanordnung nach Patentanspruch 10, wobei der Greifer (2) eine Umlenkrolle (68) mit einer etwa parallel zur Aufstandsebene (10) angeordneten Drehachse hat, an der das biegeschlaffe Zugmittel anliegt, über das die Umlenkrolle (68) und der Greifer (2) mit der Absenkkraft beaufschlagbar sind.

12. Greiferanordnung nach einem der vorhergehenden Patentansprüche, wobei der Greiferläufer (1) verfahrbar entlang einer Brücke (16) angeordnet ist, die unter dem Luftfahrzeug angeordnet und etwa parallel zur Aufstandsebene (10) bewegbar ist.

13. Greiferanordnung nach Patentanspruch 11 und 12, wobei das biegeschlaffe Zugmittel abschnittsweise entlang der Brücke (16) verläuft, und wobei der Greiferläufer (1) zwei Umlenkrollen (72a, 72b) mit jeweils einer etwa parallel zur Aufstandsebene (10) angeordneten Drehachse hat, an denen das biegeschlaffe Zugmittel anliegt.

14. Greiferanordnung nach einem der Patentansprüche 8 bis 13, wobei der Zapfen (14) an zwei gegenüber liegenden Bereichen seiner Mantelfläche je einen sich etwa parallel zur Aufstandsebene (10) erstreckenden Stift (34) hat, der jeweils in einer etwa L-förmigen Ausnehmung (40) einer am Greifer (2) angeordneten Halbhülse (36) aufnehmbar ist.

15. Greiferanordnung nach Patentanspruch 14, wobei die Stifte (34) durch eine nach unten gerichteten Bewegung des Greifers (2) in der jeweiligen Ausnehmung (40) der Halbhülse (36) einrastbar sind, und wobei die Halbhülse (36) um die Drehachse (37) drehbar im Greifer (2) gelagert ist.

16. Greiferanordnung nach Patentanspruch 15, wobei ein Drehwinkel der Halbhülse (36) im Greifer (2) um die Drehachse (37) auf etwa +/-45 Grad beschränkt ist.

## Claims

1. Gripper arrangement for coupling an aircraft to an aircraft transfer system, having a gripper (2) to which a connection part (14) attached to the aircraft can be connected, wherein the gripper (2) is designed such that the connection part (14), when in the gripper (2), can be rotated about an axis of rotation (37) that is perpendicular to a contact plane (10), and wherein the gripper (2) is coupled to a gripper runner (1) that can be moved essentially parallel to the contact plane (10), **characterized in that** the gripper (2) can be rotated or pivoted about at least one play axis (58, 64) that is approximately parallel to the contact plane (10).

2. Gripper arrangement according to Claim 1, wherein the gripper (2) can be rotated or pivoted about a first play axis (58) and about a second play axis (64), wherein the two play axes (58, 64) are arranged approximately at right angles to one another.

3. Gripper arrangement according to Claim 2, wherein the gripper (2) is coupled to the gripper runner (1) by means of a parallelogram guide (4, 48, 52, 62a, 62b), and wherein the parallelogram guide (4, 48, 52, 62a, 62b) has a coupling element (52) which is connected in a pivotable manner to the gripper runner (1) and is connected pivotably to the gripper (2) about the first play axis (58), and wherein the parallelogram guide (4, 48, 52, 62a, 62b) has a coupling rod (62a, 62b) which runs approximately parallel to the coupling element (52) and is connected in an articulated manner to the gripper (2) and to the gripper runner (1), wherein the coupling element (52) and the coupling rod (62a, 62b) are set at approximately 45 degrees to the contact plane (10) in an upper basic position of the gripper (2).

4. Gripper arrangement according to Claim 3, wherein the length of the coupling rod (62a, 62b) can be changed.

5. Gripper arrangement according to Claim 3 or 4, wherein a pivot angle between the coupling element (25) and the gripper (2) about the first play axis (58) is limited, by a limited change in length of the coupling rod (62a, 62b), to approximately +/-8 degrees.

6. Gripper arrangement according to one of Claims 3 to 5, wherein the parallelogram guide (4, 48, 52, 62a, 62b) has a coupling plate (48) which is arranged approximately perpendicular to the contact plane (10) in an unloaded basic position of the gripper (2), and with which the coupling element (52) and the coupling rod (62a, 62b) are connected in an articulated manner, and with which the gripper (2) is rotatably connected via a rotating pin (46) that is arranged perpendicular to the coupling plate (48) and runs along the second play axis (64).

7. Gripper arrangement according to Claim 6, wherein a rotation angle between the gripper (2) and the coupling plate (48), about the second play axis (64), is limited to approximately +/-5 degrees.

8. Gripper arrangement according to one of Claims 1 to 7, wherein the recess (26) of the gripper (2) is U-shaped, and wherein the connection part is a peg (14) which extends down from the aircraft approximately perpendicular to the contact plane (10), and which can be inserted via a lateral opening into the U-shaped recess (26) of the gripper (2), and wherein the lateral opening of the U-shaped recess (26) can be closed with a locking section (42).

9. Gripper arrangement according to one of the preceding claims, wherein a distance between the gripper (2) and the contact plane (10) can be set by means of a height adjustment (66, 68, 72a, 72b).

10. Gripper arrangement according to Claim 9, wherein the coupling element (52) is loaded, by two suspension struts (66) that are supported by the gripper runner (1), with an upward lifting force, and wherein the coupling plate (48) can be loaded with a downward lowering force by means of a non-rigid tension means.

11. Gripper arrangement according to Claim 10, wherein the gripper (2) has a deflection roller (68) with a rotation axis that is approximately parallel to the contact plane (10), on which the non-rigid tension means acts, via which non-rigid tension means the deflection roller (68) and the gripper (2) can be loaded with the lowering force.

12. Gripper arrangement according to one of the preceding claims, wherein the gripper runner (1) is arranged such that it can be moved along a bridge (16) that is arranged below the aircraft and can be moved approximately parallel to the contact plane (10).

13. Gripper arrangement according to Claims 11 and 12, wherein the non-rigid tension means runs in sections along the bridge (16), and wherein the gripper runner (1) has two deflection rollers (72a, 72b), each with one axis of rotation arranged approximately parallel to the contact plane (10), the non-rigid tension means acting on these.

14. Gripper arrangement according to one of Claims 8 to 13, wherein the peg (14) has, at each of two opposing regions of its lateral surface, a lug (34) which extends approximately parallel to the contact plane (10) and can be received respectively in an approximately L-shaped recess (40) of a half-sleeve (36) arranged on the gripper (2).

15. Gripper arrangement according to Claim 14, wherein the lugs (34) can be trapped in the respective recess (40) of the half-sleeve (36) by a downward movement of the gripper (2), and wherein the half-sleeve (36) is mounted in the gripper (2) so as to be able to rotate about the axis of rotation (37).

16. Gripper arrangement according to Claim 15, wherein an angle of rotation of the half-sleeve (36) in the gripper (2) about the axis of rotation (37) is limited to approximately +/-45 degrees.

## Revendications

1. Ensemble de préhension pour le couplage d'un aéronef à un système de transfert d'aéronef, avec un organe de préhension (2), auquel une pièce de liaison (14) fixée sur l'aéronef peut être reliée, dans lequel l'organe de préhension (2) est configuré de telle manière que la pièce de liaison (14) puisse tourner dans l'organe de préhension (2) autour d'un axe de rotation (37) disposé perpendiculairement à un plan de pose (10), et dans lequel l'organe de préhension (2) est couplé à un chariot de préhension (1) mobile de façon essentiellement parallèle au plan de pose (10), **caractérisé en ce que** l'organe de préhension (2) peut tourner ou pivoter autour d'au moins un axe de jeu (58, 64) disposé environ parallèlement au plan de pose (10).

2. Ensemble de préhension selon la revendication 1, dans lequel l'organe de préhension (2) peut tourner ou pivoter autour d'un premier axe de jeu (58) et autour d'un deuxième axe de jeu (64), dans lequel les deux axes de jeu (58, 64) sont disposés approximativement perpendiculairement l'un à l'autre.

3. Ensemble de préhension selon la revendication 2, dans lequel l'organe de préhension (2) est couplé au chariot de préhension (1) au moyen d'un parallélogramme articulé (4, 48, 52, 62a, 62b), et dans lequel le parallélogramme articulé (4, 48, 52, 62a, 62b) comporte un élément de couplage (52), qui est relié de façon pivotante au chariot de préhension (1) et de façon pivotante autour du premier axe de jeu (58) à l'organe de préhension (2), et dans lequel le parallélogramme articulé (4, 48, 52, 62a, 62b) comporte une bielle de couplage (62a, 62b) s'étendant environ parallèlement à l'élément de couplage (52) et reliée de façon articulée à l'organe de préhension (2) et au chariot de préhension (1), dans lequel l'élément de couplage (52) et la bielle de couplage (62a, 62b) sont inclinés d'environ 45° par rapport au plan de pose (10) dans une position de base haute de l'organe de préhension (2).

4. Ensemble de préhension selon la revendication 3, dans lequel une longueur de la bielle de couplage (62a, 62b) est variable.

5. Ensemble de préhension selon la revendication 3 ou 4, dans lequel un angle de pivotement entre l'élément de couplage (25) et l'organe de préhension (2) autour du premier axe de jeu (58) est limité à ± 8 degrés par une variation de longueur limitée de la bielle de couplage (62a, 62b).

6. Ensemble de préhension selon l'une quelconque des revendications 3 à 5, dans lequel le parallélogramme articulé (4, 48, 52, 62a, 62b) comporte une plaque de couplage (48) disposée environ perpendiculairement au plan de pose (10) dans une position de base non chargée de l'organe de préhension (2), à laquelle l'élément de couplage (52) et la bielle de couplage (62a, 62b) sont reliés de façon articulée, et à laquelle l'organe de préhension (2) est relié de façon rotative au moyen d'un tourillon (46) disposé perpendiculairement à la plaque de couplage (48) et s'étendant le long du deuxième axe de jeu (64).

7. Ensemble de préhension selon la revendication 6, dans lequel un angle de rotation entre l'organe de préhension (2) et la plaque de couplage (48) autour du deuxième axe de jeu (64) est limité à environ ± 5 degrés.

8. Ensemble de préhension selon l'une quelconque des revendications 1 à 7, dans lequel l'évidement (26) de l'organe de préhension (2) est en forme de U et dans lequel la pièce de liaison est un tourillon (14) s'étendant à partir de l'aéronef vers le bas environ perpendiculairement au plan de pose (10), qui peut être introduit par une ouverture latérale dans l'évidement en forme de U (26) de l'organe de préhension (2), et dans lequel l'ouverture latérale de l'évidement en forme de U (26) peut être fermée par une partie de verrouillage (42).

9. Ensemble de préhension selon l'une quelconque des revendications précédentes, dans lequel une distance de l'organe de préhension (2) au plan de pose (10) est réglable par l'intermédiaire d'un réglage de hauteur (66, 68, 72a, 72b).

10. Ensemble de préhension selon la revendication 9, dans lequel l'élément de couplage (52) est soumis à une force de levage dirigée vers le haut par deux jambes de force à ressort (66) s'appuyant sur le chariot de préhension (1), et dans lequel la plaque de couplage (48) peut être soumise à une force de descente dirigée vers le bas par un moyen de traction souple en flexion.

11. Ensemble de préhension selon la revendication 10, dans lequel l'organe de préhension (2) comporte un rouleau de déviation (68) avec un axe de rotation disposé environ parallèlement au plan de pose (10), sur lequel est appliqué le moyen de traction souple en flexion, par lequel le rouleau de déviation (68) et l'organe de préhension (2) peuvent être soumis à la force de descente.

12. Ensemble de préhension selon l'une quelconque des revendications précédentes, dans lequel le chariot de préhension (1) est disposé de façon déplaçable le long d'un pont (16), qui est disposé sous l'aéronef et qui s'étend environ parallèlement au plan de pose (10).

13. Ensemble de préhension selon la revendication 11 ou 12, dans lequel le moyen de traction souple en flexion s'étend partiellement le long du pont (16), et dans lequel le chariot de préhension (1) comporte deux rouleaux de déviation (72a, 72b) avec respectivement un axe de rotation disposé environ parallèlement au plan de pose (10), sur lesquels le moyen de traction souple en flexion est appliqué.

14. Ensemble de préhension selon l'une quelconque des revendications 8 à 13, dans lequel le tourillon (14) comporte sur deux régions opposées l'une à l'autre de sa surface latérale chaque fois un goujon (34) s'étendant environ parallèlement au plan de pose (10), qui peut être logé dans un évidement environ en forme de L (40) d'une demi-douille (36) disposée sur l'organe de préhension (2).

15. Ensemble de préhension selon la revendication 14, dans lequel les goujons (34) peuvent être encliquetés dans l'évidement respectif (40) de la demi-douille (36) par un mouvement de l'organe de préhension (2) dirigé vers le bas, et dans lequel la demi-douille (36) est montée dans l'organe de préhension (2) de façon rotative autour de l'axe de rotation (37).

16. Ensemble de préhension selon la revendication 15, dans lequel un angle de rotation de la demi-douille (36) dans l'organe de préhension (2) autour de l'axe de rotation (37) est limité à environ ± 45 degrés.
